Europäisches Patentamt

European Patent Office

Office européen des brevets

(11) Veröffentlichungsnummer : **0 020 863**
**B1**

(12) **EUROPÄISCHE PATENTSCHRIFT**

(45) Veröffentlichungstag der Patentschrift :
07.04.82

(51) Int. Cl.³ : **C 09 J   3/00**, C 08 L 77/00

(21) Anmeldenummer : **80101396.2**

(22) Anmeldetag : **17.03.80**

(54) **Pulverförmiges Polyamidgemisch zur Verwendung zum Heissiegeln von Textilien nach dem Pulverpunktverfahren.**

(30) Priorität : **19.05.79 DE 2920416**

(43) Veröffentlichungstag der Anmeldung :
**07.01.81 (Patentblatt 81/01)**

(45) Bekanntmachung des Hinweises auf die Patenterteilung : **07.04.82 Patentblatt 82/14**

(84) Benannte Vertragsstaaten :
**CH FR GB IT NL**

(56) Entgegenhaltungen :
**BE - A - 752 668**
**DE - A - 2 444 560**
**FR - A - 2 126 423**
**FR - A - 2 291 262**

(73) Patentinhaber : **CHEMISCHE WERKE HÜLS AG**
**Postfach 1320**
**D-4370 Marl 1 (DE)**

(72) Erfinder : **Feldmann, Rainer, Dr.**
**Leverkusener Strasse 27**
**D-4370 Marl (DE)**
Erfinder : **Scholten, Heinz, Dr.**
**Rehwinkel 3**
**D-4358 Haltern (DE)**

Imprimerie Jouve, 18, rue St-Denis, 75001 Paris, France

# 0 020 863

## Pulverförmiges Polyamidgemisch zur Verwendung zum Heißsiegeln von Textilien nach dem Pulverpunktverfahren

Die Verwendung von Copolyamiden als Schmelzkleber ist seit langem bekannt (US-A 2 252 555). Als Schmelzkleber haben insbesondere solche auf der Basis von Laurinlactam in den letzten Jahren Eingang in die Technik des Heißsiegelns von Textilien gefunden (DE-B 12 53 449). Da diese Schmelzkleber noch nicht voll befriedigen können, insbesondere hinsichtlich ihrer Heißwasser- und Reinigungsbeständigkeit, wurden diese vielfach abgewandelt. So beschreibt die DE-A 19 66 919 Schmelzkleber auf der Basis von Copolyamiden, welche verzweigtkettige Diaminbausteine enthalten, die eine verbesserte Reinigungsbeständigkeit aufweisen, die jedoch bei höheren Temperaturen fixiert werden müssen. Copolyamide auf der Basis von Nonamethylendiamin haben ebenfalls einen zu hohen Schmelzpunkt und sind daher nicht als Schmelzkleber zum Heißsiegeln von Textilien geeignet (DE-A 25 08 112, 26 42 244). Niedrigschmelzende Copolyamide befriedigen nicht hinsichtlich ihrer Heißwasserbeständigkeit und ihrer Reinigungsbeständigkeit (DE-A 23 24 159, 23 24 160, 24 36 430, 28 06 933). Aus der zuvor genannten US-A 2 252 555 ist auch bekannt, daß Copolyamide im Gemisch mit Homopolyamiden insbesondere zum Verkleben von Metalloberflächen geeignet sind (l.c. Spalte 4, Zeilen 1 bis 10). Die gleiche Lehre gibt die DE-B 22 38 547.

Die DE-B 25 50 803 gibt die Lehre, Gemische von kristallinen Homo- oder Copolyamiden des Laurinlactams und der 11-Aminoundecansäure in bestimmten Mengenverhältnissen im Gemisch mit kristallinen Homo- oder Copolyamiden des Hexamethylendiamins und der 1,12-Dodecandicarbonsäure zum Verkleben von Metallen zu verwenden, wobei diese Gemische auch in Form von Pulvern eingesetzt werden können. Es ist jedoch in diesem Fall erforderlich, im Falle der Copolyamide solche zu verwenden, die höchstens 5 bzw. 10 Gewichtsprozent andere copolyamidbildende Grundbausteine enthalten. Es sind also zwingend kristalline Homo- oder Copolyamide einzusetzen.

Diese Gemische werden insbesondere in Form von Folien zur Verklebung der Seitenfugen von Konservendosen eingesetzt. Nach der Lehre der DE-B 25 50 803 wird nur dann eine gute Klebfestigkeit des Heißschmelzklebers bei hohen Temperaturen und insbesondere eine gute Wasserbeständigkeit der Verklebung erreicht, wenn die Gemische eine hohe Kristallinität haben. Außerdem ist nur dann gewährleistet, daß man mit äußerst kurzen Schmelzabkühl-Zyklen arbeiten kann.

Ganz andere Verhältnisse bestehen bei der Verklebung von Textilien nach dem Pulverpunktverfahren. Es werden keine kurzen Zykluszeiten in der Bügelpresse benötigt, dagegen wird eine Verklebung in einem weiten Temperaturintervall gewünscht, der Kleber muß das Gewebe möglichst gut benetzen und muß gut beständig gegen heiße Waschlaugen und chemische Reinigungsmittel sein. Für empfindliche Gewebe sind nur sehr niedrige Fixiertemperaturen erlaubt. Es sollte daher ein Schmelzbereich von mehr als 135 °C nicht überschritten werden. Diese Forderungen sind mit den in der DE-B 25 50 803 beschriebenen Gemischen nicht zu erfüllen.

Aus der US-A 26 98 966 ist auch bekannt, Gemische aus pulverförmigen Homopolyamiden zum Herstellen von Formkörpern zu verwenden, wobei zunächst aus dem Pulvergemisch ein Formkörper gepreßt wird, der anschließend bei höherer Temperatur gesintert wird.

Diese Literaturstelle gibt keinen Hinweis zur Verwendung von pulverförmigen Gemischen aus Copolyamiden zum Heißsiegeln von Textilien nach dem Pulverpunktverfahren.

Aufgabe der Erfindung ist es, Copolyamide zu finden, welche sowohl eine gute Wasch-, d.h. Heißwasserbeständigkeit als auch eine gute Reinigungsbeständigkeit aufweisen, die bei niedrigeren Temperaturen verklebt werden können und dabei nicht in ihrer Haftfestigkeit nachlassen, sowohl beim Waschen als auch beim Chemischreinigen. Insbesondere stellt sich die Aufgabe, siliconisierte Gewebe mit Hilfe des Pulverpunktverfahrens zu beschichten und anschließend zu verkleben. Bei diesen Geweben haben die bisher bekanntgewordenen Schmelzkleber keine hinreichenden Ergebnisse hinsichtlich Haftfestigkeit, Heißwasserbeständigkeit und Reinigungsbeständigkeit erbracht. Es wurde nun gefunden, daß die geschilderten Nachteile des Standes der Technik überwunden werden, wenn zum Heißsiegeln von Textilien nach dem Pulverpunktverfahren pulverförmige Copolyamidgemische verwendet werden, die bezogen auf die Summe der Copolyamide enthalten :

a) 95 bis 40 Gewichtsprozent mindestens eines Copolyamids mit einem Schmelzpunkt von mindestens 110 bis 140 °C und einem Anteil des Grundbausteins Laurinlactam von mindestens 20 und höchstens 70 Gewichtsprozent und

b) 5 bis 60 Gewichtsprozent mindestens eines Copolyamids mit einem Schmelzpunkt von 80 bis 110 °C und einem Anteil des Grundbaustein Laurinlactam oder Laurinlactam und 11-Aminoundecansäure von mindestens 25 und höchstens 60 Gewichtsprozent.

Der Schmelzpunkt ist hierbei definiert durch das Aufschmelzen eines Pulvers in einem Schmelzröhrchen in einem Gerät Mettler Fp 51.

Vorteilhaft beträgt die Menge der Copolyamide a) 90 bis 60 Gewichtsprozent, die der Copolyamide, b) 10 bis 40 Gewichtsprozent.

Die Copolyamide a) sollen den Grundbaustein Laurinlactam vorzugsweise mindestens zu 25, insbesondere mindestens zu 30 Gewichtsprozent enthalten ; umgekehrt soll dieser Grundbaustein höchstens in Mengen von vorzugsweise 60 Gewichtsprozent enthalten sein.

Bei den Copolyamiden b) sind diese Grundbausteine Laurinlactam oder Laurinlactam und 11-

2

Aminoundecansäure in Mengen von vorzugsweise mindestens 30-65 Gewichtsprozent, insbesondere 35-60 Gewichtsprozent und höchstens in Mengen von vorzugsweise 65 Gewichtsprozent, insbesondere 60 Gewichtsprozent, enthalten.

Wesentlich ist dabei, daß die Copolyamide jeweils innerhalb der angegebenen Temperaturgrenze schmelzen. Diese Temperaturgrenzen liegen für die Copolyamide a) vorteilhaft bei 110 bis 140 °C, insbesondere bei 115 bis 135 °C und bei den Copolyamiden b) vorteilhaft bei 80 bis 110 °C, insbesondere bei 85 bis 105 °C.

Als Copolyamide werden insbesondere mindestens Terpolyamide eingesetzt. Sie werden erhalten nach der bekannten hydrolytischen Polymerisation. Prinzipiell können die Copolyamide auch durch Umamidierung von Homopolyamiden hergestellt werden. Da dieser Prozeß jedoch wirtschaftlich nicht zweckmäßig ist, ist diese Herstellungsmethode weniger bevorzugt.

Als Copolyamide sind alle Copolyamide geeignet, die in dem angegebenen Schmelzbereich liegen. Darunter werden auch Copolyamide verstanden, die oligomere oder polymere Fettsäuren enthalten. Diese Copolyamide sind jedoch weniger bevorzugt.

Der Temperaturbereich für die erfindungsgemäßen Copolyamid-Mischungen ist kritisch. Er muß in dem oben geschilderten Bereich bei den Mischkomponenten a) und b) liegen.

Die Lösungsviskosität $\eta$rel (gemessen in 0,5 %-iger Kresollösung bei 28 °C) liegt bei den Copolyamiden a) zwischen 1,4 und 1,75, bevorzugt zwischen 1,45 und 1,70, bei den Copolyamiden b) zwischen 1,30 und 1,60, bevorzugt zwischen 1,35 und 1,50.

Als Copolyamide der Gruppe a) seien beispielsweise genannt :

| | Laurinlactam | Caprolactam | Adipinsäure/ Hexamethylendiamin |
|---|---|---|---|
| Fp °C | Gew.-% | Gew.-% | Gew.-% |
| 130 | 33 1/3 | 33 1/3 | 33 1/3 |
| 127 | 40 | 40 | 20 |
| 122 | 40 | 30 | 30 |
| 135 | 60 | 25 | 15 |
| | | | Azelainsäure/ Hexamethylendiamin |
| 117 | 40 | 35 | 25 |
| | | | Sebacinsäure/ Hexamethylendiamin |
| 116 | 40 | 35 | 25 |
| | | | Adipinsäure/ Isophorondiamin/ Trimethylhexamethyldiamin |
| 128 | 60 | 16 | 24 |
| | | | Dodecandisäure/ Isophorondiamin |
| 132 | 60 | 20 | 20 |
| | | | Dodecandisäure/ Hexamethylendiamin |
| 116 | 40 | 30 | 30 |
| 122 | 50 | 25 | 25 |

Als Copolyamide der Gruppe b) seien beispielsweise genannt :

| | Laurinlactam | Caprolactam | Adipinsäure/ Hexamethylendiamin | Sebacinsäure/ Hexamethylendiamin |
|---|---|---|---|---|
| Fp °C | Gew.-% | Gew.-% | Gew.-% | Gew.-% |
| 98 | 35 | 25 | 20 | 20 |
| 95 | 35 | 30 | 15 | 20 |

(Fortsetzung)

| Laurinlactam Fp°C | Gew.-% | Caprolactam Gew.-% | Adipinsäure/ Hexamethylendiamin Gew.-% | Sebacinsäure/ Hexamethylendiamin Gew.-% |
|---|---|---|---|---|
| 94 | 40 | 30 | 15 | 15 |
| | | | | Azelainsäure/ Hexamethylendiamin |
| 97 | 30 | 30 | 10 | 30 |
| 90 | 40 | 30 | 15 | 15 |
| | | | | Dodecandisäure/ Hexamethylendiamin |
| 100 | 40 | 30 | 15 | 15 |
| | | | Aminoundecansäure | Azelainsäure/ Hexamethylendiamin |
| 88 | 25 | 25 | 25 | 25 |
| 93 | 30 | 30 | 20 | 20 |
| | | | | Adipinsäure/ Hexamethylendiamin |
| 93 | 30 | 30 | 20 | 20 |
| 98 | 25 | 25 | 25 | 25 |
| | | | | Sebacinsäure/ Hexamethylendiamin |
| 89 | 25 | 30 | 25 | 20 |
| 90 | 25 | 25 | 25 | 25 |
| | | | | Dodecandisäure/ Hexamethylendiamin |
| 102 | 30 | 35 | 20 | 15 |
| | | | | Adipinsäure/ Dodecanmethylendiamin |
| 93 | 25 | 25 | 25 | 25 |
| | 20 | 30 | 20 | 30 |

Die Herstellung der pulverförmigen Gemische kann erfolgen durch Kaltmahlen der Granulatgemische und anschließendes Klassieren. Vorteilhafter ist es jedoch, die bereits gemahlenen Pulver zu mischen, wobei, um ein Verklumpen zu vermeiden, solche Mischaggregate eingesetzt werden, welche ohne Scherweg und Erwärmung arbeiten.

Die Korngrößenverteilung der Pulver liegt in dem für das Pulverpunktverfahren üblichen Bereich, nämlich 60 bis 200 µm, insbesondere 80 bis 200 µm.

Den pulverförmigen Gemischen können übliche Zusatzstoffe, falls gewünscht, zugesetzt werden, wie z.B. Metallseifen, wie Ca-stearat, Zn-stearat, optische Aufheller oder gegebenenfalls Stabilisierungsmittel wie sterisch gehinderte Phenole.

Die in der nachfolgenden Tabelle aufgeführten Pulver und Pulvergemische mit einer Korngrößenverteilung von 60 bis 200 µm wurden geprüft. Sie wurden auf einen handelsüblichen Einlagestoff mittels einer Pulverpunktmaschine mit einem 11 mash Raster mit einem Auflagegewicht von 18 ± 2 g/m² aufgebracht. Auf einer Bügelpresse wurde bei 140 °C mit einem Preßdruck von 350 p/cm² mit einem handelsüblichen siliconisierten Oberstoff verklebt. Die verklebten Teile wurden 3 mal bei 60 °C mit einem handelsüblichen Feinwaschmittel gewaschen und 5 mal mit einem üblichen chemischen Reinigungsmittel gereinigt. Die Trennfestigkeit wurde nach DIN 54 310 bestimmt, wobei die Werte in N/5 cm angegeben sind.

4

Tabelle    X = Isophorondiamin + Trimethylhexamethylendiamin in gleichen Gewichts-verhältnissen

| Vergleichs-beispiele | Art und Zusetzung der Copolyamide | Fp | Trennfestigkeit | | |
|---|---|---|---|---|---|
| | | | unbehandelt | nach Wäsche | nach Reinigung |
| 1 | A Copolyamid 12/6/6,6 im Gew.-verhältnis 60/25/15 | 135°C | 4 | 2 | 3 |
| 2 | B Copolyamid 12/6/X,6 im Gew.-verhältnis 60/17/23 | 128°C | 6 | 3 | 4 |
| 3 | C Copolyamid 12/11/6/6,9 im Gew.-verhältnis 25/25/25/25 | 91°C | 7 | 0 | 4 |
| 4 | D Copolyamid 12/6/6,12 im Gew.-verhältnis 60/20/20 | 132°C | 7 | 3 | 3 |
| 5 | E Copolyamid 1 + 2 im Gew.-verhältnis 50:50 | | 5 | 3 | 2 |
| 6 | F Copolyamid 4 + 3 im Gew.-verhältnis 25:75 | | 7 | 0 | 5 |
| 7 (DE-/3 25 50 803) | G Polyamid-11, Polyamid-12, Polyamid-6,12 im Gew.-verhältnis 60:40:10 | | 0 | 0 | 0 |
| 8 (DE-/3 25 50 803) | H Polyamid-11, Polyamid-12, Copolyamid-6,12 im Gew.-verhältnis 60:40:10 | | 0 | 0 | 0 |

Fortsetzung

Tabelle    X = Isophorondiamin + Trimethylhexamethylendiamin in gleichen Gewichts-verhältnissen

| Vergleichs-beispiele | Art und Zusetzung der Copolyamide | Fp | Trennfestigkeit | | |
|---|---|---|---|---|---|
| | | | unbehandelt | nach Wäsche | nach Reinigung |
| Beispiele | | | | | |
| 1 | D+C Copolyamid 4 + 3 im Gew.-verhältnis 50:50 | | 9 | 7 | 10 |
| 2 | D+C Copolyamid 4 + 3 im Gew.-verhältnis 75:25 | | 6 | 6 | 9 |
| 3 | D+C Copolyamid 4 + 3 im Gew.-verhältnis 85:15 | | 7 | 7 | 9 |
| 4 | A+B+C Copolyamid 1 + 2 + 3 im Gew.-verhältnis 20:40:40 | | 7 | 7 | 7 |
| 5 | A+B+C Copolyamid 1 + 2 + 3 im Gew.-verhältnis 40:40:40 | | 10 | 9 | 10 |

## Ansprüche

1. Pulverförmiges Copolyamidgemisch zur Verwendung zum Heißsiegeln von Textilien nach dem Pulverpunktverfahren, dadurch gekennzeichnet, daß es, bezogen auf die Summe der Copolyamide,
a) 95 bis 40 Gewichtsprozent mindestens eines ternären Copolyamids mit einem Schmelzpunkt von mindestens 110 bis 140 °C und einem Anteil des Grundbausteines Laurinlactam von 20 bis 70 Gewichtsprozent und
b) 5 bis 60 Gewichtsprozent mindestens eines ternären Copolyamids mit einem Schmelzpunkt von 80 bis 110 °C und einem Anteil des Grundbausteines Laurinlactam oder Laurinlactam und 11-Aminoundecansäure von 25 bis 70 Gewichtsprozent enthält.

2. Pulverförmiges Polyamidgemisch nach Anspruch 1, gekennzeichnet durch einen Gehalt an Copolyamiden a) von 90 bis 60 Gewichtsprozent und einen Gehalt an Copolyamiden, b) von 10 bis 40 Gewichtsprozent, bezogen auf die Summe der Copolyamide.

3. Pulverförmiges Polyamidgemisch nach den Ansprüchen 1 und 2, dadurch gekennzeichnet, daß das Copolyamid a) 25 bis 60 Gewichtsprozent den Grundbaustein Laurinlactam und das Copolyamid b) 30 bis 70 Gewichtsprozent den Grundbaustein Laurinlactam oder Laurinlactam und 11-Aminoundecansäure enthält.

4. Pulverförmiges Gemisch nach den Ansprüchen 1 bis 3, dadurch gekennzeichnet, daß die Pulver eine Korngröße von 60 bis 200 μm besitzen.

5. Pulverförmiges Gemisch nach den Ansprüchen 1 bis 4, dadurch gekennzeichnet, daß die Pulver nach dem Kaltmahlverfahren hergestellt worden sind.

5

**Claims**

1. A pulverulent copolyamide mixture for use as a hotmelt adhesive for textile material according to the powder dot process, characterised in that it comprises, based on total copolyamide,

a) 95 to 40 percent by weight of at least one ternary copolyamide having a melting point of 110 to 140 °C and containing 20 to 70 percent by weight of polymerised lauric acid lactam units, and

b) 5 to 60 percent by weight of at least one ternary copolyamide having a melting point of 80 to 110 °C and containing 25 to 70 percent by weight of polymerised lauric acid lactam or lauric acid lactam and 11-aminoundecanoic acid units.

2. A pulverulent polyamide mixture according to claim 1, characterised in that it contains 90 to 60 weight percent of copolyamides a) and 10 to 40 percent by weight of copolyamides b), based on total copolyamide.

3. A pulverulent polyamide mixture according to claims 1 and 2, characterised in that copolyamide a) contains 25 to 60 percent by weight of polymerised lauric acid lactam units, and copolyamide b) contains 30 to 70 percent by weight of polymerised lauric acid lactam or lauric acid lactam and 11-aminoundecanoic acid units.

4. A pulverulent mixture according to claims 1 to 3, characterised in that the powder has a particle size of 60 to 200 $\mu$m.

5. A pulverulent mixture according to claims 1 to 4, characterised in that the powder has been obtained by the cold milling process.

**Revendications**

1. Mélange pulvérulent de copolyamides destiné à servir au thermosoudage de textiles selon le procédé par points de poudre, caractérisé par le fait qu'il contient, relativement au total des copolyamides :

a) De 95 à 40 % en poids d'au moins une copolyamide ternaire ayant un point de fusion de 110 à 140 °C et une teneur en laurolactame, constituant fondamental, de 20 à 70 % en poids et

b) De 5 à 60 % en poids d'au moins une copolyamide ternaire ayant un point de fusion de 80 à 110 °C et une teneur en laurolactame, ou en laurolactame et acide 11-amino-undécanoïque, comme constituant fondamental, de 25 à 70 % en poids.

2. Mélange pulvérulent de copolyamides selon la revendication 1, caractérisé par une teneur en copolyamides a) de 90 à 60 % en poids et une teneur en copolyamides b) de 10 à 40 % en poids, relativement au total des copolyamides.

3. Mélange pulvérulent de copolyamides selon les revendications 1 et 2, caractérisé par le fait que la copolyamide (a) contient de 25 à 60 % en poids du laurolactame, constituant fondamental, et que la copolyamide (b) contient de 30 à 70 % en poids de laurolactame, ou de laurolactame et d'acide 11-amino-undécanoïque comme constituant fondamental.

4. Mélange pulvérulent selon les revendications 1 à 3, caractérisé par le fait que les poudres ont une grosseur de grain de 60 à 200 $\mu$m.

5. Mélange pulvérulent selon les revendications 1 à 4, caractérisé par le fait que les poudres ont été préparées par le procédé de broyage à froid.